Europäisches Patentamt

European Patent Office

Office européen des brevets

(19)

(11) Veröffentlichungsnummer: **0 281 652**
**B1**

(12) **EUROPÄISCHE PATENTSCHRIFT**

(45) Veröffentlichungstag der Patentschrift:
**05.12.90**

(21) Anmeldenummer: **87103453.4**

(22) Anmeldetag: **10.03.87**

(51) Int. Cl.⁵: **H04L 27/00, H04L 27/22**

(54) Verfahren zum Gewinnen eines Phasendifferenzsignals.

(43) Veröffentlichungstag der Anmeldung:
**14.09.88 Patentblatt 88/37**

(45) Bekanntmachung des Hinweises auf die Patenterteilung:
**05.12.90 Patentblatt 90/49**

(84) Benannte Vertragsstaaten:
**DE FR GB IT NL SE**

(56) Entgegenhaltungen:
**EP-A- 0 071 514**
**EP-A- 0 079 576**
**EP-A- 0 154 503**
**US-A- 4 084 137**

**PATENT ABSTRACTS OF JAPAN, Band 10,**
**Nr. 175 (E-413)[2231], 20. Juni 1986; & JP-A-61 24 354**

(73) Patentinhaber: **ANT Nachrichtentechnik GmbH,**
**Gerberstrasse 33, D-7150 Backnang(DE)**

(72) Erfinder: **Hoffmann, Michael, Dr.rer.nat.,**
**Zwischenäckerle 60, D-7150 Backnang(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, ·wenn die Einspruchsgebühr entrichtet worden ist (Art. 99(1) Europäisches Patentübereinkommen).

**Beschreibung**

Die vorliegende Erfindung betrifft ein Verfahren zum Gewinnen eines Signals, das die Phasendifferenz zwischen einem lokalen Trägersignal und dem Träger eines amplituden- und/oder phasenumgetasteten Empfangssignals wiedergibt, wobei die im Oberbegriff des Anspruchs 1 angegebenen Verfahrensschritte vollzogen werden.

Ein derartiges Verfahren ist aus einem Aufsatz von M. Hoffmann "Carrier Recovery for m-QAM-Signals" in ECRR, S. 247-253, vde-verlag München, Nov. 1986 bekannt, um ein Steuersignal für einen spannungsgesteuerten Oszillator zu gewinnen, der zur Trägerrückgewinnung in einer Demodulatorschaltung für amplituden- und/oder phasenumgetastete (QASK) Signale eingesetzt ist.

Der Erfindung liegt die Aufgabe zugrunde, ein Verfahren der eingangs genannten Art anzugeben, womit ein Signal gewonnen werden kann, das auch bei einer Amplitudenstörung oder ungenauer Amplitudeneinstellung eins QASK-Empfangssignals eindeutig darüber informiert, wann die Phasendifferenz zwischen einem lokalen Trägersignal und dem QASK-Signal-Träger genau O° oder eine dazu äquivalente Phase (z.B. bei m-QAM 0° +n•90°, n gazzahlig) beträgt.

Diese Aufgabe wird erfindungsgemäß durch die im Anspruch 1 angegebenen Merkmale gelöst.

Zweckmäßige Ausführungen der Erfindung gehen aus den Unteransprüchen hervor.

Das Verfahren der Erfindung hat den Vorteil, daß es mit relativ geringem Schaltungsaufwand realisierbar ist und selbst bei Anwendung auf extrem hochstufige (z.B. 256-QAM) amplituden- und/oder phasenumgetastete Signale sehr sicher die korrekte Phasendifferenz gewinnt.

Anhand von in der Zeichnung dargestellten Ausführungsbeispielen wird nachfolgend die Erfindung näher erläutert. Es zeigen:

Fig. 1 ein Blockschaltbild eines QASK-Empfängers,
Fig. 2 ein Signalzustandsdiagramm eines 64 QAM-Systems,
Fig. 3 ein Blockschaltbild zur Ermittlung eines Phasendifferenzsignals,
Fig. 4 ein Entscheidungsdiagramm eines 64 QAM-Systems,
Fig. 5 eine Phasendetektorcharakteristik eines 64 QAM-Systems und
Fig. 6 ein Blockschaltbild zur Ermittlung eines Phasendifferenzsignals mit quantisierten Signalkomponenten.

Nachrichtentechnische Verfahren zur Informationsübertragung mittels amplituden- und/oder phasenumgetasteter Signale, abgekürzt auch QASK-Signale genannt, haben in den letzten Jahren zunehmend an Bedeutung gewonnen. QASK-Signale können bekanntlich folgendermaßen beschrieben werden:

$$u_1(t) = u_1 \sum_k g(t-kT) \cdot \left\{ a_K \cos(\omega t + \phi) + b_K \sin(\omega t + \phi) \right\} \qquad (1)$$

Hierbei sind $\cos(\omega t + \phi)$ die Normal- und $\sin(\omega t + \phi)$ die Quadraturkomponente des Signalträgers, und $g(t)$ ist eine Funktion, welche folgende Bedingung erfüllt:

$$g(t) = \begin{cases} 1 & \text{für } t=0 \\ 0 & \text{für } t=nT, \ n \text{ ganzzahlig}, \ n \neq 0 \end{cases} \qquad (2)$$

Die Wertepaare $(a_K, b_K)$ beinhalten die zeit- und wertediskrete zu übertragende Information zu den Zeitpunkten $t=kT$ (T: Taktdauer). Bei vorgegebenem m-stufigem Übertragungsverfahren dürfen die Wertepaare nur m verschiedene Wertkombinationen annehmen. Von besonderer Bedeutung sind die m-stufigen Quadratur-Amplitudenmodulationsverfahren (QAM- Verfahren).

Aus der Literatur sind noch weitere QASK-Modulationsverfahren bekannt, zum Beispiel Kombinationen aus n-PSK/k-ASK (n+k=m) oder Kombinationen aus n-PSK/k-ASK (n+k>m). die weiteren Ausführungen treffen für alle QASK-Verfahren zu, werden aber anhand eines QAM-Verfahrens erläutert.

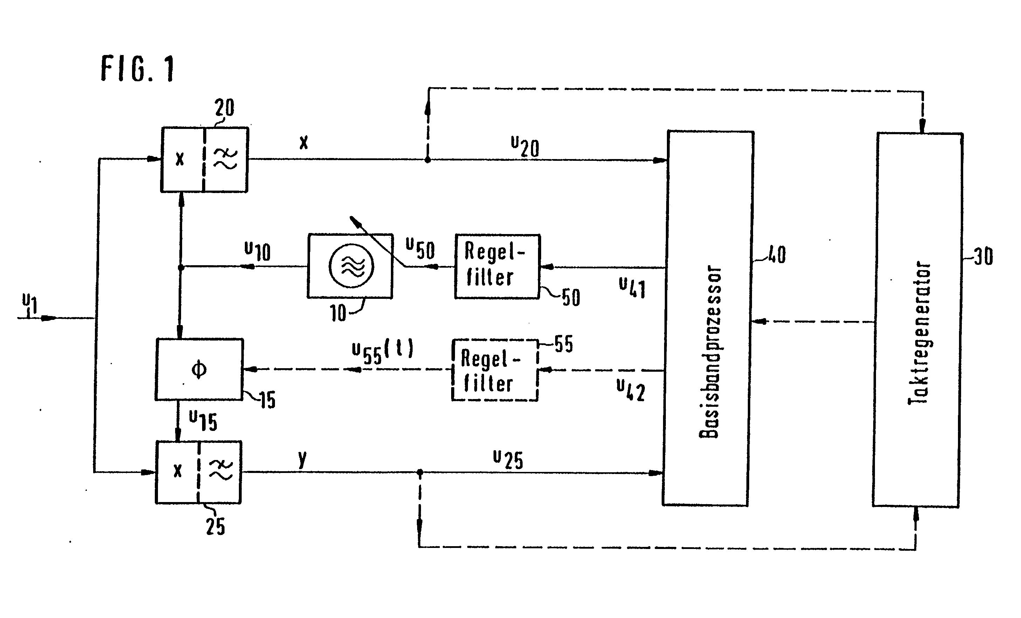

Das in Fig. 1 gezeigte Blockschaltbild gibt das bekannte Schaltungsprinzip eines Quadraturempfängers wieder, welcher zur Demodulation von QASK-Signalen geeignet ist. Ein spannungsgesteuerter Qszillator (VCO) 10 hat die Aufgabe, ein zum Träger des Eingangssignals $u_i(t)$ in phasenstarrer Relation stehendes Signal:

$$u_{10}(t) = \hat{u}_{10} \cdot \cos(\omega t + b + \psi) \tag{3}$$

zu erzeugen.

Die Phase $\psi$ ist von dem aus einem Regelfilter 50 stammenden VCO-Steuersignal abhängig. Ein Phasenschieber 15 bildet aus dem Signal $u_{10}(t)$ das dazu um 90° verschobene Signal

$$u_{15}(t) = \hat{u}_{10} \cdot \sin(\omega t + b + \psi) \tag{4}$$

Die Abwärtsmischer 20 bzw. 25 erzeugen aus dem Eingangssignal $u_1(t)$ und den Signalen $u_{10}(t)$ bzw. $u_{15}(t)$ die Signale

$$u_{20}(t) = A \cdot \sum_K g(t-kT) \cdot \left[ a_K \cos\psi - b_K \sin\psi \right] \tag{5}$$

und

$$u_{25}(t) = A \cdot \sum_k g(t-kT) \cdot \left[ a_K \sin\psi + b_K \cos\psi \right] \tag{6}$$

Die in $u_{20}(t)$ und $u_{25}(t)$ enthaltene Information über die Taktfrequenz 1/T und ihre Phasenlage kann in einem Taktregenerator 30 ausgenutzt werden, um ein Taktsignal phasenrichtig zu regenerieren. Eine Ausführung eines Taktregenerators geht z.B. aus einem Aufsatz von Le-Ngoc, Tho; Feher, Kamilo: A Digital Approach to Symbol Timing Recovery Systems in IEEE Trans. Com., vol. COM-28, no.12, Dec. 1980, pp. 1993-1999 hervor.

Das regenerierte Taktsignal benutzt man, um die Signale $u_{20}(t)$ und $u_{25}(t)$ in den Zeitpunkten t=kT abzutasten. Diese Aufgabe wird neben anderen in einem Basisbandprozessor 40 ausgeführt. Es gilt für die beiden in Quadratur zueinander stehenden Basisbandsignalkomponenten:

$$x := u_{20}(kT) = A \cdot (a_K \cos\psi - b_K \sin\psi) \tag{7}$$

$$y := u_{25}(kT) = A \cdot (a_K \sin\psi + b_K \cos\psi) \tag{8}$$

Für $\psi = 0$ geben die beiden Signalkomponenten x und y die demodulierte Information $a_K$, $b_K$ wieder. Eine wesentliche Aufgabe der Demodulatorschaltung ist somit die Regelung der Phase $\psi$ auf 0. Da bei $\psi=0$ das lokal erzeugte Signal $u_{10}(t)$ bis auf einen Amplitudenfaktor mit der einen Trägerkomponente des Eingangssignals $u_1(t)$ identisch ist, ist $u_{10}(t)$ das lokal regenerierte Trägersignal.

Das Ausgangssignal $u_{41}(t)$ des unten detailliert beschriebenen Basisbandprozessors 40, welches eine Funktion der Phasendifferenz zwischen dem Träger des empfangenen Eingangssignals $u_1(t)$ und dem in spannungsgesteuerten Oszillator 10 erzeugten lokalen Trägersignal $u_{10}(t)$ ist, wird in der Schaltung gemäß Fig. 1 in einem Regelfilter 50 gefiltert. Dessen Ausgangssignal $u_{50}(t)$ ist das Steuersignal für den spannungsgesteuerten Oszillator (VCO) 10.

Die Abwärtsmischer 20, 25, der Basisbandprozessor 40, das Regelfilter 50, der VCO 10 und der Phasenschieber 15 gemäß Fig. 1 bilden die Regelschleife zur lokalen Regeneration des Trägers des Eingangssignals $u_1(t)$. Gleichzeitig bilden die Blöcke 20, 25, 10 und 15 den Quadraturempfänger.

Für eine korrekte Demodulation ist es wesentlich, daß die lokal regenerierten Trägerkomponenten $u_{10}(t)$ und $u_{15}(t)$ um 90° gegeneinander phasenverschoben sind. In der Praxis können jedoch kleine Abweichungen von der 90°-Phasendifferenz vorhanden sein. Dann gilt statt der Gln. (3), (4):

$$u_{10}(t) = \hat{u}_{10} \cos(\omega t + b + \psi) \tag{9}$$

$$u_{15}(t) = \hat{u}_{10} \sin(\omega t + b + \psi + \delta) \tag{10}$$

Damit ändern sich die Gln. (7), (8) in

$$x = A \cdot \left\{ a_K \cos\psi - b_K \sin\psi \right\} \tag{11}$$

$$y = A \cdot \left\{ a_K \sin(\psi+\delta) + b_K \cos(\psi+\delta) \right\} \tag{12}$$

Aus diesen Gleichungen folgt sofort, daß für eine optimale Demodulation $\psi=\delta=0°$ anzustreben ist. Neben der Trägerregenerationsschleife, welche die Phasendifferenz $\psi$ minimiert, bietet sich daher auch eine zweite Regelschleife zur Minimierung von $\delta$ an.

Zu diesem Zweck kann der Phasenschieber 15 in der Schaltung gemäß Fig. 1 so aufgebaut werden, daß ein Feinabgleich der Phasenverschiebung über ein Steuersignal möglich wird. Die Gewinnung der zusätslichen Regelinformation $u_{42}(t)$, die hierfür benötigt wird, kann ebenfalls im Basisbandprozessor 40 gewonnen werden.

In dem Blockschaltbild der Fig. 1 wird das Regelsignal $u_{42}(t)$, das eine Funktion der Phasendifferenz $\delta$ zwischen den Trägersignalkomponenten $u_{10}(t)$ und $u_{15}(t)$ ist und in ähnlicher Weise ermittelt wird wie das Signal $u_{41}(t)$, auf ein Regelfilter 55 geschaltet, dessen Ausgangssignal $u_{55}(t)$ auf den Steuereingang des Phasenschiebers 15 geführt wird.

Die Abwärtsmischer 20, 25, der Basisbandprozessor 40, das Regelfilter 55, der Lokaloszillator 10 und der Phasenschieber 15 bilden den Regelkreis zur Nachführung der Phasendifferenz $\delta$ auf den Wert 0°.

Im folgenden soll nun das vom Basisbandprozessor durchzuführende Verfahren beschrieben werden, mit dem ein von der Phasendifferenz zwischen dem lokalen Trägersignal und dem Träger des Empfangssignals abhängiges Signal gebildet werden kann, das eindeutig nur dann zu Null wird, wenn auch tatsächlich die Phasendifferenz 0° oder ien dazu äquivalente Phase beträgt.

Im Quadraturempfänger des Fig. 1 werden die Normal- und die Quadraturkomponente x und y komplexen Hüllkurve des empfangenen Signals $u_1(t)$ gebildet. Der Quadraturempfänger erzeugt somit zwei kartesisch orientierte Signalkomponenten x und y.

In einem ersten Verfahrensschritt gemäß werden nun die kartesisch orientierten Signalkomponenten x und y in zwei polar orientierte Signalkomponenten

$$R = \sqrt{x^2 + y^2} \tag{13}$$

$$\alpha = \begin{cases} \arctan(y/x) & \text{, falls } x \geq 0 \\ \arctan(y/x) + \pi & \text{, falls } x < 0 \end{cases}$$

transformiert, wobei die polare Signalkomponente R die Amplitude eines durch die beiden kartesisch orientierten Signalkomponenten x und y gebildeten Signalzustandsverktors und die andere polare Signalkomponente $\alpha$ den Phasenwinkel zu diesem Signalzustandsvektor darstellt. Mit den gleichungen (7) und (8) folgt für die polaren Signalkomponenten R und $\alpha$:

$$R = \sqrt{a_K^2 + b_K^2} \tag{14}$$

$$\alpha = \begin{cases} \psi + \arctan(b_K/a_K) & \text{, falls } x \geq 0 \\ \psi + \arctan(b_K/a_K) + \pi & \text{, falls } x < 0 \end{cases} \tag{15}$$

Mit Hilfe eines Schwellwertentscheiders kann man auch noch die korrekte Amplitude des gesendeten Signalzustands $(a_K, b_K)$ aus R der Amplitude eines Empfangssignalzustandes bestimmen, wenn dessen Signalkomponenten x und y durch Rauschen oder durch Verschiebung des Abtastzeitpunktes gegenüber kT leicht verfälscht sind.

Zur Bestimmung der Entscheiderausgangssignalwerte, einer für die Dimensionierung des Schwellwertentscheiders wesentlichen Grundlage, geht man wie folgt vor. Man bestimmt zu allen erlaubten Sendesignalzuständen $(a_K, b_K)$ die Amplitudenwerte

$$R = \sqrt{a_K^2 + b_K^2}$$

und ordnet sie der Größe nach. Man erhält so einen Wertevorrat

$$0 = \tilde{R}_0 \leq R_1 < \tilde{R}_1 < R_2 < \tilde{R}_2 < \ldots < \tilde{R}_{r-1} < R_r < \tilde{R}_r.$$

mit r verschiedenen Werten $R_i$, die "Nominalamplituden", mit

$$0 \leq R_l < \ldots < R_i < \ldots < R_r.$$

Der Schwellwertentscheider für die Amplitude muß dann genau diese r Ausgangswerte erzeugen können. Die Entscheidungsschwellen $\tilde{R}_i$ werden wie folgt festgelegt:

$$0 = \tilde{R}_0 \leq R_1 < \tilde{R}_1 < R_2 < \tilde{R}_2 < \ldots < \tilde{R}_{r-1} < R_r < \tilde{R}_r.$$

Eine empfehlenswerte Lage der Schwellen wird dadurch bestimmt, daß man die Wahrscheinlichkeiten, R im Intervall ($\tilde{R}_i$, $\tilde{R}_{i+1}$) aufzufinden, wenn alle möglichen Signalzustände mit Amplitudenwert $R_i$ gesendet wurden, für alle i gleichsetzt. Eine andere einfachere Möglichkeit zur Schwellendefinition ist beispielsweise durch $\tilde{R}_i = (R_i + R_{i+1})/2$ für i = 1,...,r-1 gegeben.

Um aus einem empfangenen Signalzustand den tatsächlich gesendeten Signalzustand ableiten zu können, ist zunächst festzustellen, innerhalb welcher Schwellen die Amplitude R des empfangenen Signalzustandes liegt. Diese Amplitude R wird dann zu derjenigen Amplitude aus dem vorhandenen Wertevorrat

$$\mathcal{R}$$

entschieden, die innerhalb der festgestellten Schwellen liegt.

Nachdem entschieden worden ist, welchem Amplitudenwert aus dem Wertevorrat

$$\mathcal{R}$$

die empfangene Amplitude zuzuordnen ist, muß auch noch bestimmt werden, welchem Phasenwinkel aus einem vorhandenen Wertevorrat der Phasenwinkel des empfangenen Signalzustandes zuzuordnen ist. Dieser Entscheidungsvorgang wird ebenfalls mit Hilfe eines Schwellwertentscheiders durchgeführt.

Für die Bestimmung der Signalausgangswerte des Phasenwinkelschwellwertentscheiders ist wie folgt vorzugehen:

Zu allen erlaubten Sendesignalzuständen $(a_K, b_K)$ mit Amplitudenwert $R_i$ bestimmt man die Phasenwinkel und ordnet sie der Größe nach. Man erhält so zu jedem Amplitudenwert $R_i$ $q_i$ verschiedene Phasenwinkelwerte mit

$$-\pi/2 \leq \alpha_{i,1} < \ldots < \alpha_{i,j} < \ldots < \alpha_{i,q_i}.$$

Der zu jedem Normalamplitudenwert $R_i$ gehörende Wertevorrat wird im folgenden mit

$$\mathcal{\alpha}_i$$

bezeichnet.

Der Phasenwinkelschwellwertentscheider muß dann genau diese $q_i$ Ausgangswerte erzeugen können. Die Entscheidungsschwellen $\tilde{\alpha}_{i,j}$ werden wie folgt festgelegt:

$$\tilde{\alpha}_{i,0} < \alpha_{i,1} < \tilde{\alpha}_{i,1} < \alpha_{i,2} < \ldots < \tilde{\alpha}_{i,q_{i-1}} < \alpha_{i,q_i} < \tilde{\alpha}_{i,0} + 2\mu = \tilde{\alpha}_{i,q_i}.$$

Eine empfehlenswerte Lage der Schwellen $\tilde{\alpha}_{i,j}$ wird dadurch errechnet, daß man die Wahrscheinlichkeiten, $\alpha$ im Intervall ($\tilde{\alpha}_{i,j}$, $\tilde{\alpha}_{i,j-1}$) aufzufinden, wenn der Signalzustand mit $R = R_i$ und $\alpha = \alpha_{i,j}$ gesendet wurde, bei festem i für alle j gleichsetzt. Eine andere Möglichkeit zur Schwellendefinition ist beispielsweise durch

$$\tilde{\alpha}_{i,j} = (\alpha_{i,j} + \alpha_{k,j+1})/2 \text{ für } j=1,\ldots, q_{i-1}; \tilde{\alpha}_{i,qi} = (\alpha_{i,qi} + \alpha_{i,1} + 2\pi)/2 \text{ gegeben.}$$

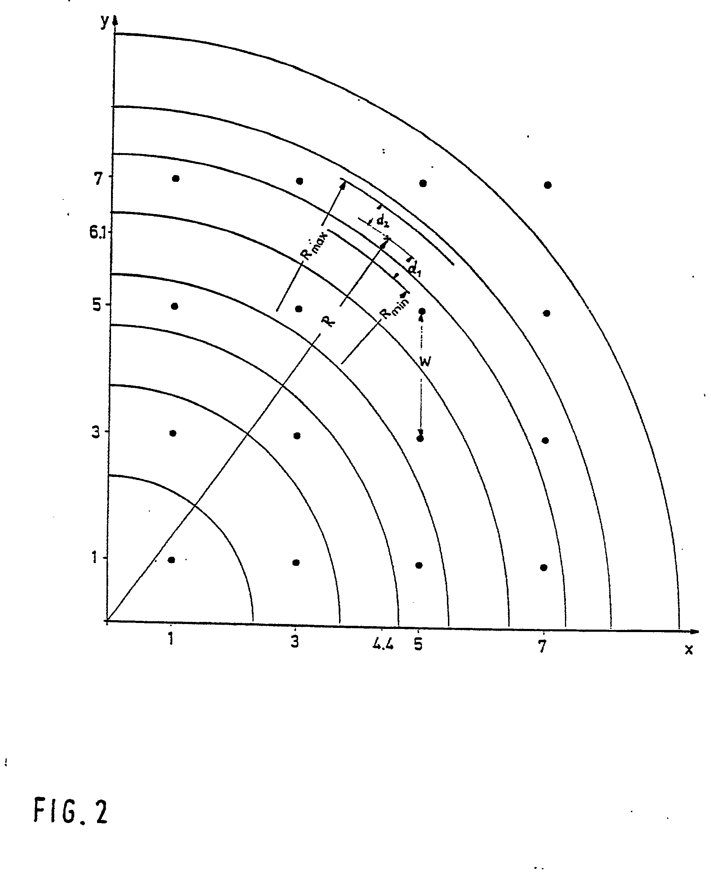

Anhand eines in der Fig. 2 nur im ersten Quadranten dargestellten Signalzustandsdiagramms eines 64 QAM-Systems soll im folgenden die vorangehend dargelegte Amplituden- und Phasenwinkelentscheidung verdeutlicht werden.

Angenommen, in dem 64-QAM-Sende/Empfangssystem mit den der Fig. 2 zu entnehmenden Werten {-7,-5,-3,-1,+1,+3,+5,+7} für die x- bzw. y-Komponente der Sollsignalzustände werde der Sollsignalzustand (5,5) gesendet. Aufgrund einer noch nicht erfolgten Phasensynchronisation des lokalen Trägersignals werde im Quadraturempfänger das Signalkomponentenpaar (x,y)=(3.6,6.1) empfangen. Dem entspricht das polare Signalkomponentenpaar (R, $\alpha$)=(7.083,59.45°). Die möglichen Nominalamplituden sind im Wertevorrat { 1.414, 3.162, 4.234, 5.099, 5.831, 7.071, 7.616, 8.602, 9.899 } enthalten. Bildet man die Amplitudenschwellen als arithmetische Mittel benachbarter Nominalamplituden, dann wird die Amplitude R des Empfangssignals zu $R_6$-7.071 entschieden. Zur Nominalamplitude $R_6$ gehört der Phasenwinkelwertevorrat

$$\alpha_6 = \left\{ 81.87°,\ 45.00°,\ 8.13° \right\} .$$

Bildet man die Phasenwinkelschwellen als arithmetische Mittel benachbarter Phasenwinkel des entsprechenden Wertevorrats, dann wird $\alpha$ zu $\tilde{\alpha}_6 = \{81.87°, 45.00°, 8.13°\}$ .$_6 = 45°$ entschieden. Die als Regelgröße für den spannungsgesteuerten Oszillator dienende Phasendifferenz zwischen Ist- und Sollwert beträgt dann 14.45°. Das Regelvorzeichen ist in diesem speziellen Beispiel positiv.

In einem weiteren Beispiel soll nun der Fall behandelt werden, daß die Amplitude durch Unvollkommenheiten der Amplitudenregelung nur relativ ungenau bestimmt ist. Wie im ersten Beispiel werde der Signalzustand (5,5) gesendet. Im Empfänger sei die Amplitudenregelung nur auf 7% genau möglich und es werde der kartesische Signalzustand (x,y)=(4.4,6.1) empfangen. Dem entspricht der polare Signalzustand $(R, \alpha)=(7.52, 54.2°)$. Tatsächlich ist also die empfangene Amplitude ca. 6.4% zu groß. Dies führt dazu, daß die Amplitude R des Empfangssignal zu $R_7 = 7.616$ entschieden wird. Zu dieser Nominalamplitude gehört der Phasenwinkelwertevorrat

$$\alpha_7 = \left\{ 66.8°,\ 23.2° \right\} .$$

Daher wird der Phasenwinkel $\alpha$ des Empfangssignals zu $\tilde{\alpha}_7 = 66.8$ entschieden. Dem Polarkoordinatenpaar $(R, \alpha)=(7.616, 66.8°)$ entspricht das kartesische Paar $(x,y)=(3,7)$. Bei korrekt eingestellter Amplitude wäre der zugrundegelegte Wertevorrat für die Phasenwinkel so wie im vorangegangenen Beispiel gewesen. Dann wäre auf $\tilde{\alpha}_6 = 45°$, also auf den korrekten Winkel entschieden worden. Die Amplitudenunsicherheit führt in diesem Beispiel also zu einer Fehlentscheidung.

Um solche Fehlentscheidungen zu vermeiden, wird nach der Polarkoodinatenwandlung eines Empfangssignalzustandes abweichend von der zuvor aufgezeigten Vorgehensweise folgendes Verfahren angewendet.

Wie in Fig. 1 angedeutet, werden zu der aus dem Empfangssignal abgeleiteten polaren Amplitude R ein oberer Grenzwert $R_{max}$ und ein unterer Grenzwert $R_{min}$ gebildet. Dabei entsteht der untere Grenzwert $R_{min}$ durch Subtraktion eines Betrages $d_1$ von der Amplitude R, und der obere Grenzwert $R_{max}$ ensteht durch Addition eines Betrages $d_2$ zur Amplitude R. Die Beträge $d_1$ und $d_2$ können so groß gewählt werden, daß gilt $0 < d_1 < R$ und $d_2 > 0$. Z.B. können die Beträge $d_1 = d_2 = w/4$ sein, wobei w der Abstand zwischen den x- bzw. y-Komponenten zweier erlaubter Signalzustände ist.

Anschließend werden durch eine Schwellwertentscheidung aus dem Wertevorrat

$$\mathfrak{R}$$

der Nominalamplituden alle diejenigen Nominalamplitudenwerte ermittelt, welche sich zwischen der höchsten unterhalb oder auf dem unteren Grenzwert $R_{min}$ liegenden Entscheidungsschwelle und der niedrigsten oberhalb oder auf dem oberen Grenzwert $R_{max}$ liegenden Entscheidungsschwelle befinden. Die so ausgewählten Nominalamplituden können daher als diejenigen Nominalamplituden interpretiert werden, welche der Amplitude des Empfangssignalzustandes unter Berücksichtigung der Amplitudenunsicherheit am nächsten kommen. Unter der Bedingung, daß $\tilde{R}_i \leq R_{min} < \tilde{R}_{i+1}$ und $R_{i+m-1} < R_{max} \leq \tilde{R}_{i+m}$ ist, werden also die Amplituden $R_{i+1}$ bis $R_{i+m}$ ausgewählt, wenn gilt:

$\tilde{R}_i < R_{i+1} < \tilde{R}_{i+1} < ... < R_{i+m} < \tilde{R}_{i+m}$

Anschließend wird aus der Vereinigungsmenge

$$\alpha$$

der Wertevorräte

$$\alpha_{i+1} \cup \cdots \cup \alpha_{i+m}$$

der Phasenwinkel aller Signalzustände mit den Nominalamplituden $R_{i+1}$ bis $R_{i+m}$ derjenige Phasenwinkel $\tilde{\alpha}$ bestimmt, der dem aus dem Empfangssignalzustand ermittelten Phasenwinkel $\alpha$ am nächsten kommt.

In einem letzten Verfahrensschritt wird schließlich die Differenz

$\alpha - \tilde{\alpha} = \psi$ (16)

gebildet, welche die dem empfangenen Signalzustand zugeordnete Phasendifferenz $\psi$ darstellt und als

Steuersignal für den spannungsgesteuerten Oszillator des Quadraturempfängers dient.

Wie sich das vorangehend beschriebene Verfahren auf die Bestimmung der Phasendifferenz $\psi$ auswirkt, obwohl eine Amplitudenunsicherheit des Empfangssignals vorliegt, sei nochmals anhand des bereits dargelegten und in Fig. 2 aufgezeigten Beispiels erläutert.

Gemäß dem Beispiel sei der Signalzustand $(x,y)=(5,5)$ gesendet worden und der empfangene Signalzustand sei $(x,y)=(4.4, 6.1)$. Dem letzteren entspricht dann der polare Signalzustand $(R, \alpha)=(7.52, 54.2°)$. Mit den Beträgen $d_1=d_2=0.4$ erhält man als unteren Grenzwert $R_{min}=7.52-0.4=7.12$ und als oberen Grenzwert $R_{max}=7.52+0.4=7.92$. Wählt man als Amplitudenschwellen die arithmetischen Mittel benachbarter Nominalamplituden, dann ist die größte Schwelle unter dem unteren Grenzwert $R_{min}$ $\tilde{R}_5=6.45$ und die kleinste Schwelle oberhalb des oberen Grenzwertes $R_{max}$ $\tilde{R}_7=8.11$. Zu der Amplitude $R=7.52$ des Empfangssignals gehören damit die möglichen Nominalamplituden $R_6=7.07$ und $R_7=7.61$. Die Wertevorräte der dazu gehörenden Phasenwinkel sind

$$\mathcal{A}_6 = \{ 81.9°, 45°, 8.1° \} \quad \text{sowie} \quad \mathcal{A}_7 = \{ 66.8°, 23.2° \} \quad .$$

Damit ist der Wertevorrat

$$\mathcal{A} = \{ 8.1°, 23.2°, 45°, 66.8°, 81.9° \} \quad .$$

Der nächste zu $\alpha = 54.2°$ gelegene Phasenwinkel aus dem Wertevorrat

$$\mathcal{A}$$

ist daher $\tilde{\alpha} = 45°$. Tatsächlich gehört zu dem wirklich gesendeten Signalzustand $(x,y)=(5,5)$ der Phasenwinkel $\tilde{\alpha}=45°$. Somit bringt das erfundene Verfahren trotz der Amplitudenunsicherheit die unverfälschte Phasendifferenz $\alpha - \tilde{\alpha}=54.2° -45°=9.2° = \psi$.

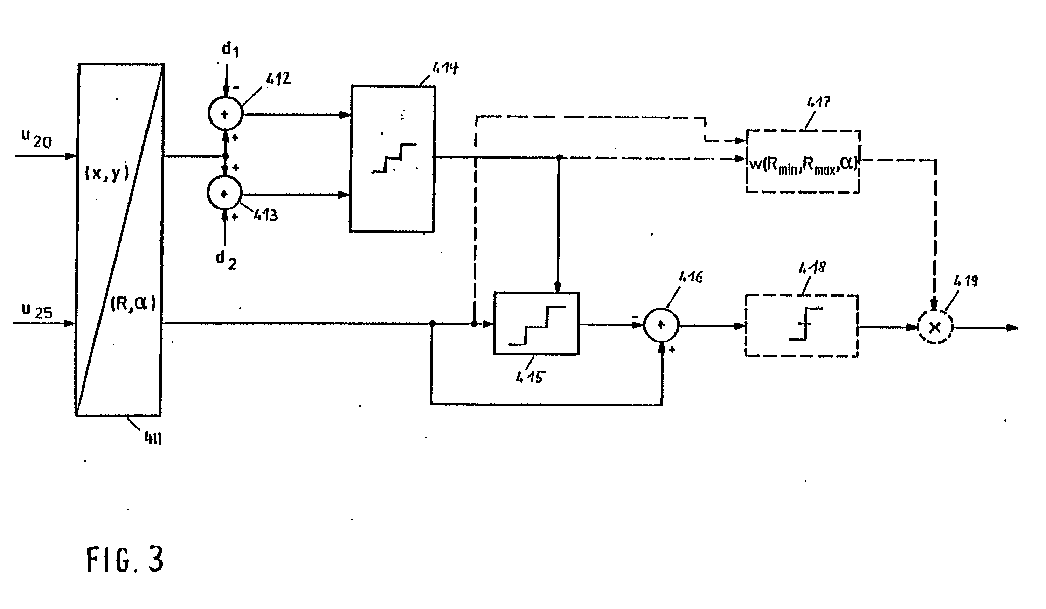

In der Fig. 3 ist ein Blockschaltbild dargestellt zur Ermittlung eines Phasendifferenzsignals nach dem oben beschriebenen Verfahren.

Von einem Koordinatenumsetzer 411, wie er z.B. aus Analog Devices, Data Sheet and Application Notes AD639, AD637, AD630, Norwood, Mass., USA, 6. 1985 bekannt ist, werden die kartesischen Signalkomponenten x und y in die polaren Signalkomponenten R und $\alpha$ transformiert. Das zur Amplitude R proportionale Ausgangssignal des Koordinatenumsetzers 411 wird auf zwei Summierglieder 451 und 452 gegeben. Im Summierglied 412 wird die Differenz $R_{min}=R-d_1$ gebildet und auf einen ersten Schwellwertentscheider 414 gegeben. Im Summierglied 413 wird die Summe $R_{max}=R+d_2$ gebildet und auf den ersten Schwellwertentscheider 414 gegeben. Der Schwellwertentscheider 414 liefert an seinem Ausgang aus seinem Wertevorrat

$$\mathcal{R}$$

alle diejenigen Nominalamplituden, welche sich zwischen der höchsten unterhalb oder auf dem unteren Grenzwert $R_{min}$ liegenden Entscheidungsschwelle und der niedrigsten oberhalb oder auf dem oberen Grenzwert $R_{max}$ liegenden Entscheidungsschwelle befinden. Das zum Phasenwinkel $\alpha$ proportionale Ausgangssignal des Koordinatenumsetzers 411 wird einem zweiten Schwellwertentscheider 415 zugeführt, der den Wertevorrat

$$\alpha$$

der Phasenwinkel sämtlicher erlaubter Signalzustände enthält. Von allen zu den vom ersten Schwellwertentscheider 414 ausgegebenen Nominalamplituden gehörenden Phasenwinkeln aus dem Wertevorrat

$$\alpha$$

wird vom zweiten Schwellwertentscheider 415 derjenige Phasenwinkel $\hat{\alpha}$ entschieden, der dem vom Empfangssignalzustand im Koordinatenumsetzer 411 abgeleiteten Phasenwinkel $\alpha$ am nächsten liegt. Sollte es im Wertevorrat

*a*

zwei verschiedene Phasenwinkel geben, die gegenüber dem Phasenwinkel $\alpha$ des Empfangssignals die gleiche Distanz haben, so gibt der Schwellwertentscheider 415 als entschiedenen Phasenwinkel $\hat{\alpha} = \alpha$ aus. Der entschiedene Phasenwinkel $\hat{\alpha}$ und der vom Empfangssignalzustand abgeleitete Phasenwinkel $\alpha$ werden einem Summierer 416 zugeführt, welcher an seinem Ausgang ein der Phasendifferenz $\psi = \alpha - \hat{\alpha}$ proportionales Signal liefert.

Die Differenz $\psi = \alpha - \hat{\alpha}$ zwischen dem Winkel $\alpha$ eines empfangenen Signalzustandes und dem durch Schwellwertentscheidung entschiedenen Winkel $\hat{\alpha}$ des am wahrscheinlichsten gesendeten Signalzustandes gibt Auskunft über die Phasendifferenz $\psi$ zwischen dem Träger des Empfangssignals und dem Träger des spannungsgesteuerten Oszillators. Dieses die Phasendifferenz wiedergebende Differenzsignal, im folgenden als Phasendetektorfunktion

$$\varepsilon_1(\psi) = \alpha - \hat{\alpha} \quad (17)$$

bezeichnet, kann direkt für die Nachregelung des spannungsgesteuerten Oszillators verwendet werden.

Die Fig. 1 zeigt einen Ausschnitt aus einem Signalzustandsdiagramm z.B. eines 64 QAM-Systems. Darin kennzeichnen die Punkte die möglichen Signalzustände bei ideal regeneriertem Träger. Jeder dieser Punkte liegt in einem sogenannten Entscheidungsgebiet, das einerseits durch die als Kreise eingezeichneten Schwellen der Amplitudenwertentscheidung und andererseits durch die Schwellen (nicht eingezeichnet in Fig. 2) der Phasenwinkelentscheidung abgegrenzt sind. Für jedes Entscheidungsgebiet gibt es eine Phasendetektorfunktion $\varepsilon_1(\psi)$ gemäß Gleichung (17).

Die gleichen Entscheidungsgebiete wie bei der Phasendetektorfunktion $\varepsilon_1(\psi) = \alpha - \hat{\alpha}$ findet man auch für die folgenden abgewandelten Phasendetektorfunktionen:

$$\varepsilon_2(\psi) \quad : = \mathrm{sgn}(\alpha - \hat{\alpha}) \quad (18)$$

$$\varepsilon_3(\psi) \quad : = w(R_{min}, R_{max}, \alpha) \cdot (\alpha - \hat{\alpha}) \quad (19)$$

$$\varepsilon_4(\psi) \quad : = w(R_{min}, R_{max}, \alpha) \cdot \mathrm{sgn}(\alpha - \hat{\alpha}) \quad (20)$$

Dabei ist $w(R_{min}, R_{max}, \alpha)$ - im folgenden nur w genannt - eine nichtnegative Funktion der Lage der Grenzwerte $R_{min}$ und $R_{max}$ und des Phasenwinkels $\alpha$. w wird als Wichtungsfunktion bezeichnet. Durch w ist es möglich, einige Phasendetektorfunktionen gegenüber anderen hervorzuheben. Das Signalzustandsdiagramm in Fig. 2 läßt erkennen, daß es einige Amplitudenbereiche gibt, bei denen eine Winkelfehlentscheidung weniger wahrscheinlich ist, als in anderen. Das sind die Amplitudenbereiche, in denen nur wenige Signalzustände liegen. Ist dann w für diese Amplitudenbereiche im Mittel über die darin vorkommenden Phasenwinkel größer als für die restlichen Amplitudenbereiche, so wird eine über alle m Phasendetektorfunktionen (m = Zahl der möglichen Singalzustände) bezüglich der Amplituden gemittelte Phasendetektorcharakteristik $g(\psi) = \langle \varepsilon(\psi) \rangle$ stärker von den durch w hervorgehobenen Phasendetektorfunktionen beeinflußt.

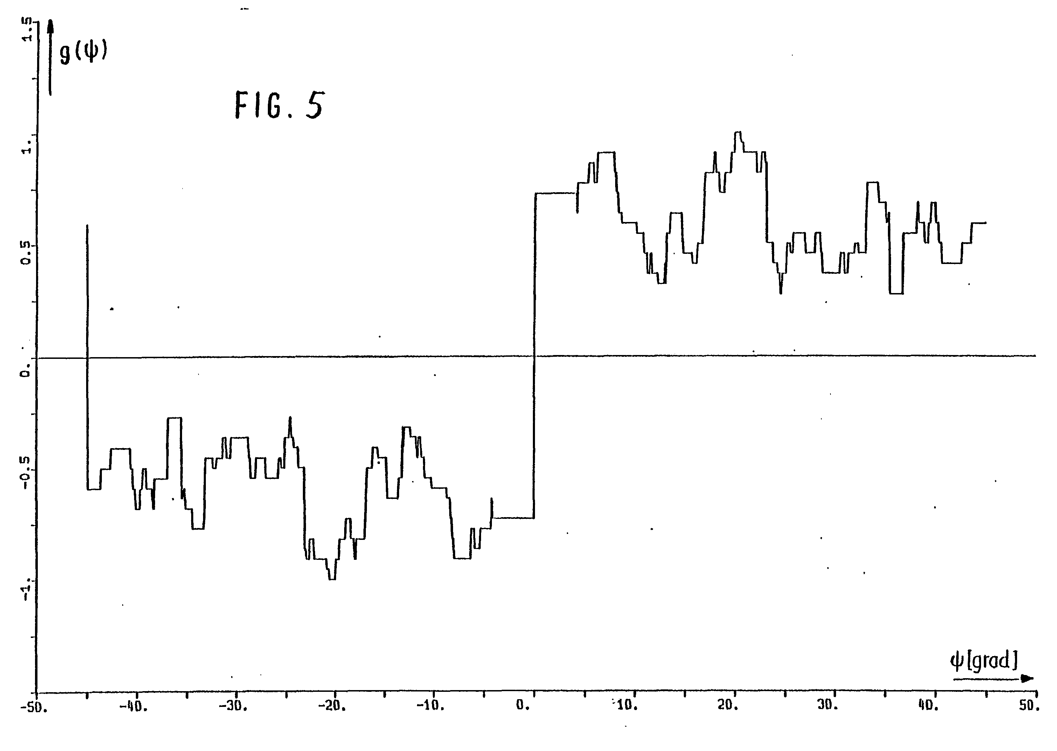

Eine solche Phasendetektorcharakteristik $g(\psi) = \langle \varepsilon(\psi) \rangle$ zeigt die Fig. 5.

Eine Synchronisation des spannungsgesteuerten Oszillators auf den Träger des Empfangssignals erfolgt für Phasendifferenzen $\psi = \psi_s$, für die gilt $g(\psi_s)=0$ und $dg/d\psi>0$. Wie oben ausgeführt, sollte eine Synchronisation nur für die Phasendifferenz $\psi = \psi_s = 0°$ erfolgen. Wird $g(\psi_s) = 0$ innerhalb eines Intervalls $(-45°, +45°)$ auch für $\psi = \psi_s \ 0°$, so kommt es zu Fehlsynchronisationen. Fehlsynchronisationspunkte gibt es aber bei der Phasendetektorcharakteristik (vgl. Fig. 5) aufgrund des erfundenen Verfahrens nicht. Hier ist ausschließlich im interessierenden Bereich $-45° < \psi < 45°$ nur bei $\psi = 0°$ $g(\psi) = 0°$.

Sofern mit der in Fig. 3 dargestellten Schaltung statt der einfachsten Phasendetektorfunktion $\varepsilon_1(\psi) = \alpha - \hat{\alpha}$ auch eine der Phasendetektorfunktionen $\varepsilon_2(\psi)$ nach Gleichung (18) oder $\varepsilon_4(\psi)$ nach Gleichung (20) realisiert werden soll, wird der Ausgang des Summierers 416 auf einen harten Begrenzer 418 zur Bildung der Signumsfunktion $\mathrm{sgn}(\alpha - \hat{\alpha})$ geschaltet. In den Fällen, in denen die Funktion $\varepsilon_3(\psi)$ nach Gleichung (19) oder $\varepsilon_1(\psi)$ nach Gleichung (17) gebildet werden soll, wird des Schaltblock 418 durch einen Kurzschluß ersetzt.

Zur Bildung der Funktion $\varepsilon_3(\psi) = w(R_{min}, R_{max}, \alpha) \cdot (\alpha - \hat{\alpha})$ oder $\varepsilon_4(\psi) = w(R_{min}, R_{max}, \alpha) \cdot \mathrm{sgn}(\alpha - \hat{\alpha})$ wird das Ausgangssignal des ersten Schwellwertentscheider 414 auf einen ersten Eingang eines die Wichtungsfunktion $w(R_{min}, R_{max}, \alpha)$ generierenden Blocks 417 gegeben. Auf einen zweiten Eingang des Schaltblocks 417 wird das Ausgangssignal $\alpha$ des Koordinatenumsetzers 411 geschaltet. Das Ausgangs-

8

signal des Schaltblocks 417 und das Phasendifferenzsignal $\psi = \alpha - \hat{\alpha}$ oder sgn($\alpha - \hat{\alpha}$) werden dann in einem Multiplizierer 419 multipliziert. Am Ausgang des Multiplizierers 419 steht dann ein Signal an, welches der Funktion

$\varepsilon_3(\psi) = w(R_{min}, R_{max}, \alpha) \cdot (\alpha - \hat{\alpha})$ oder der Funktion

$\varepsilon_4(\psi) = w(R_{min}, R_{max}, \alpha) \cdot$ sgn($\alpha - \hat{\alpha}$) proportional ist.

Im folgenden wird eine Abwandlung des zuvor beschriebenen Verfahrens angegeben. Hier wird eine Approximierung der kartesischen Signalkomponenten x und y durch quantisierte Signalkomponenten

$$\hat{\hat{x}} \quad und \quad \hat{\hat{y}}$$

vorgenommen. Aus den quantisierten kartesischen Signalkomponenten

$$\hat{\hat{x}} \quad und \quad \hat{\hat{y}}$$

entsteht die quantisierte polare Signalkomponente:

$$\hat{\hat{\alpha}} := \begin{cases} arctan(\hat{\hat{y}}/\hat{\hat{x}}) & , falls \ \hat{\hat{x}} \geq 0 \\ arctan(\hat{\hat{y}}/\hat{\hat{x}})+ & , falls \ \hat{\hat{x}} < 0 \end{cases} \tag{21}$$

Damit erhält man als Näherungen für die Phasendetektorfunktionen $\varepsilon_2(\psi)$ bzw. $\varepsilon_4(\psi)$:

$$\varepsilon_5(\psi) := sgn(\hat{\hat{\alpha}} - \hat{\alpha}) \qquad bzw. \tag{22}$$

$$\varepsilon_6(\psi) := w(R_{min}, R_{max}, \hat{\hat{\alpha}}) \cdot sgn(\hat{\hat{\alpha}} - \hat{\alpha}) \tag{23}$$

Die Bestimmung von $\hat{\alpha}$ und $\hat{R}$ aus

$$\hat{\hat{x}}, \ \hat{\hat{y}}$$

erfolgt im Prinzip genau wie oben beschrieben, nur daß zur $\hat{R}$- und $\hat{\alpha}$-Entscheidung nun das Signalpaar

$$(\hat{\hat{x}}, \ \hat{\hat{y}})$$

statt (x, y) ansteht.

Es existiert nur eine bestimmte Anzahl von Paaren

$$(\hat{\hat{x}}, \ \hat{\hat{y}}),$$

welche von der Anzahl der Quantisierungsstufen für x und y abhängt. Für die Bildung von $\hat{R}$ und $\hat{\alpha}$ ist daher keine Quantisierung oder Entscheidung mehr nötig, sondern nur noch eine Verknüpfung, welche jedem Signalpaar

$$(\hat{\hat{x}}, \ \hat{\hat{y}})$$

ein bestimmtes Ausgangssignalpaar ($\hat{R}$, $\hat{\alpha}$) zuordnet. Daraus kann dann in einfacher Weise ein Entscheidungsdiagramm gebildet werden.

Ein aus der Phasendetektorfunktion

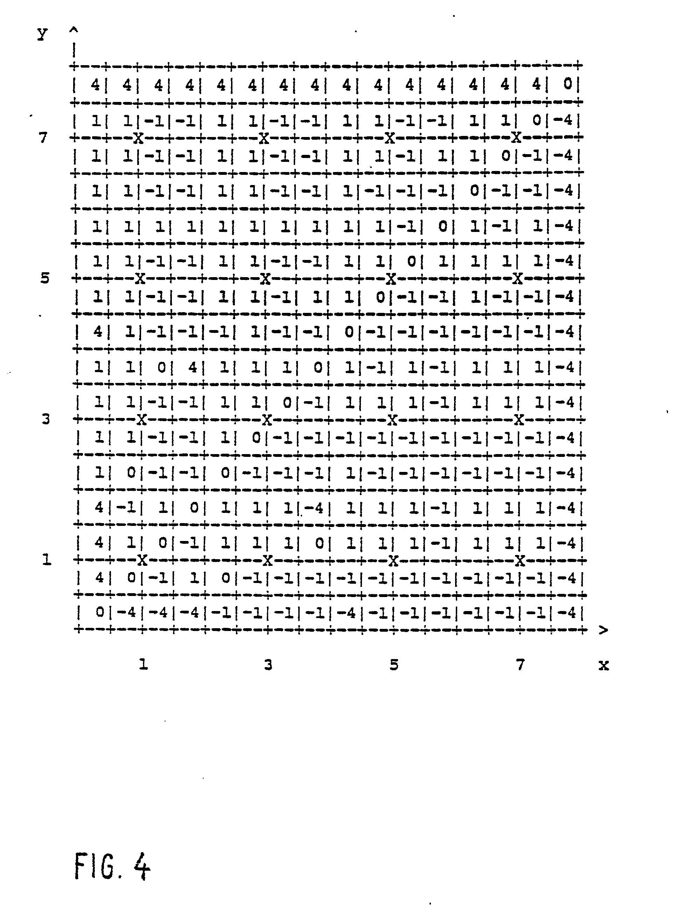

$\varepsilon_6(\psi) = w(R_{min}, R_{max}, \alpha)$sgn($\alpha - \hat{\alpha}$) abgeleitetes Entscheidungsdiagramm für ein 64QAM-Signal ist in der Fig. 4 dargestellt und zwar nur dessen 1. Quadrant, weil im 2. bzw. 3. bzw. 4. Quadranten die Entscheidungsgebiete durch Rotation um 90° bzw. 180° bzw. 270° aus dem Entscheidungsgebiet des 1. Quadranten hervorgehen.

In Fig. 5 ist die für dieses Beispiel geltende mittlere Phasendetektorcharakteristik g($\psi$)= <$\varepsilon_6(\psi)$> dargestellt, wenn vorausgesetzt wird, daß alle Signalzustände mit gleicher Häufigkeit auftreten.

Die Phasendetektorfunktion $\varepsilon_5(\psi)$ bzw. $\varepsilon_6(\psi)$, im folgenden kurz als $\varepsilon(\psi)$ bezeichnet, lassen sich in nach einem besonders einfachen Verfahren bestimmen.

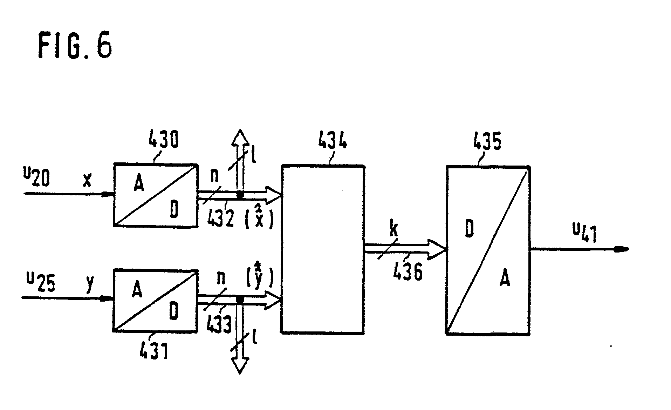

Ein Blockschaltbild zur Durchführung des Verfahrens zeigt Fig. 6. Die kartesisch orientierten Signalkomponenten x und y werden mittels zweier Analog-Digitial-Umsetzer 430 und 431 quantisiert und codiert, so daß an den Ausgängen 432 und 433 der Analog-Digital-Umsetzer 430 und 431 n-bit-Worte

$$\hat{x} \quad und \quad \hat{y}$$

vorliegen. Die beiden n-bit-Ausgänge 432 bzw. 433 der Analog-Digital-Umsetzer werden auf ein logische Auswahlschaltung 434 geschaltet. Diese bildet die Zuordnung der verschiedenen Funktionswerte $\varepsilon(\psi)$ zu den Eingangsdaten (x, y) und gibt die Funktionswerte in einer k-bit-codierten Form auf einer k-bit-Leitung 436 aus. Aus der k-bit-Darstellung formt ein Digital-Analog-Umsetzer 435 das zu $\varepsilon(\psi)$ proportionale Signal.

Von besonderem Vorteil bei dieser Realisierung ist, daß nach erfolgter Synchronisation $\ell$ der n bit auf den Leitungen 432 bzw. 433 bereits die $\ell$-bit-codierte Form des demodulierten Signals x bzw. y darstellen. Eine mögliche Realisierungsform der logischen Auswahlschaltung 434 ist ein Speicher (z.B. RAM, ROM, PROM), welcher zu der aus

$$\hat{x} \quad und \quad \hat{y}$$

gebildeten 2n-bit-Adresse k verschiedene Funktionsbits bildet, welche in ihrer Gesamtheit dem zu jeder Adresse gehörenden Funktionswert von $\varepsilon(\psi)$ entsprechen.

Ein weiterer Vorteil der Schaltung nach Fig. 6 in Kombination mit der Ausführungsform der Auswahlschaltung 434 als Speicher ist, daß die Phasendetektorcharakteristik, die ja durch den Speicherinhalt festgelegt ist, leicht durch Austausch des Speichers oder seines inhalts abgeändert werden kann.

## Patentansprüche

1. Verfahren zum Gewinnen eines Signals, das die Phasendifferenz ($\psi$) zwischen einem lokalen Trägersignal und dem Träger eines amplituden- und/oder phasenumgetasteten Empfangssignals ($u_i$) wiedergibt, nach dem
a) zunächst das Empfangssignal ($u_i$) in zwei von der Phasendifferenz abhängige, in Quadratur zueinander stehende, kartesisch orientierte Signalkomponenten (x,y) zerlegt wird, wobei die beiden Signalkomponenten zusammen mehrere verschiedene Signalzustände darstellen,
b) und darauf jedes Paar kartesisch orientierter Signalkomponenten (x,y), welches jeweils einen der möglichen Signalzustände bildet, in zwei polar orientierte Signalkomponenten (R, $\alpha$) umgewandelt wird, von denen die eine polare Signalkomponente die Amplitude (R) eines durch die beiden kartesisch orientierten Signalkomponenten (x,y) gebildeten Signalzustandsvektors und die andere polare Signalkomponente den Phasenwinkel ($\alpha$) zu diesem Signalzustandsvektor darstellt,
dadurch gekennzeichnet,
(c) daß dann zu der jeweils aus einem Empfangssignal abgeleiteten polaren Amplitude (R) durch Addition eines Betrages ($d_2$) ein oberer Grenzwert ($R_{max}$) und durch Subtraktion eines Betrages ($d_1$) von der Amplitude ein unterer Grenzwert ($R_{min}$) bestimmt wird,
d) daß anschießend mit Hilfe eines ersten Schwellwertentscheiders (414), der die von allen erlaubten, unverfälschten Signalzuständen abgeleiteten Amplituden enthält und dessen Schwellen so gestuft sind, daß unterhalb und oberhalb eines jeden vorkommenden Amplitudenwertes eine Schwelle liegt, alle diejenigen Amplituden ermittelt werden, welche sich zwischen der höchsten unterhalb oder auf dem unteren Grenzwert ($R_{min}$) liegenden Schwelle und der niedrigsten oberhalb oder auf dem oberen Grenzwert ($R_{max}$) liegenden Schwelle befinden,
e) daß darauf in einem zweiten Schwellwertentscheider (415), der den Wertevorrat der von allen erlaubten, unverfälschten Signalzuständen abgeleiteten Phasenwinkel ($\hat{\alpha}$) enthält, derjenige Phasenwinkel ermittelt wird, der von den zu allen Signalzustandsvektoren mit den zuvor bestimmten Amplitudenwerten gehörenden Phasenwinkeln dem aus dem Eingangssignal ($u_i$) abgeleiteten Phasenwinkel am nächsten kommt und
f) daß schließlich zwischen diesem durch Schwellwertentscheidung bestimmten Phasenwinkel ($\hat{\alpha}$) und dem aus dem Empfangssignal ($u_i$) abgeleiteten Phasenwinkel ($\alpha$) die Differenz ermittelt wird, welche Differenz proportional der Phasendifferenz ($\psi$) zwischen dem lokalen Trägersignal und dem Träger des amplituden und/oder phasenumgetasteten Empfanssignals ($u_i$) ist.

2. Verfahren nach Anspruch 1, dadurch gekennzeichnet, daß nach der Zerlegung des Empfangssignals ($u_i$) in zwei kartesische Signalkomponenten (x,y) jede dieser beiden kartesischen Signalkomponenten (x,y) quantisiert wird, und daß dann jedes Paar kartesisch orientierter quantisierter Signalkomponenten

$$(\hat{x}, \hat{y}),$$

welches jeweils einen der möglichen quantisierten Signalzustände bildet, in zwei polar orientierte Signalkomponenten umgewandelt wird, von denen die eine polare Signalkomponente die Amplitude eines durch die beiden kartesisch orientierten quantisierten Signalkomponenten gebildeten Signalzustandsvektors und die andere polare Signalkomponente

$$(\hat{\hat{x}}, \hat{\hat{y}})$$

den Phasenwinkel

$$(\hat{\hat{\alpha}})$$

zu diesem Signalzustandsvektor darstellt.

3. Verfahren nach Anspruch 1 und 2, dadurch gekennzeichnet, daß die in Quadratur zueiander stehenden, kartesisch orientierten Signalkomponenten (x,y) parallel in Analog-Digital-Umsetzern (430, 431) quantisiert und codiert werden, daß jeweils aus den zwei zu einem jeden quantisierten Signalzustand gehörenden codierten Signalkomponenten zusammen ein Codewort gebildet wird, das die Adresse in einem Speicher (434) angibt, wo das für den jeweiligen quantisierten Signalzustand der beiden Signalkomponenten ermittelte Differenzsignal oder ein dazu proportionales Signal codiert abgespeichert ist, und daß das der Adresse zugeordnete codierte Differenzsignal aus dem Speicher (434) herausgelesen und einem Digital-Analog-Umsetzer (435) zugeführt wird.

4. Verfahren nach Anspruch 1 oder 2, dadurch gekennzeichnet, daß aus der Phasendifferenz mit Hilfe einer Begrenzerschaltung (423) eine Signumsfunktion gebildet wird.

5. Verfahren nach Anspruch 1 oder 2, dadurch gekennzeichnet, daß die Phasendifferenz mit einer Wichtungsfunktion (w) multipliziert wird, die einen um so größeren Wert annimmt, je weniger Signalzustände mit der gleichen Amplitude vorkommen wie der Signalzustand hat, für den die Phasendifferenz ermittelt worden ist.

6. Verfahren nach Anspruch 42, dadurch gekennzeichnet, daß die Signumsfunktion der Phasendifferenz mit einer Wichtungsfunktion (w) multipliziert wird, die einem um so größeren Wert annimmt, je weniger Signalzustände mit der gleichen Amplitude vorkommen wie der Signalzustand hat, für den die Phasenwinkeldifferenz ermittelt worden ist.

7. Verfahren nach Anspruch 5 oder 6, dadurch gekennzeichnet, daß die Wichtungsfunktion (w) keine negativen Werte annimmt.

8. Verfahren nach einem der vorhergehenden Ansprüche, gekennzeichnet durch, die Anwendung des die Phasendifferenz wiedergebenden Signals als Steuersignal für einen spannungsgesteuerten Oszillator (10) in einer Demodulatorschaltung mit Trägerrückgewinnung für amplituden- und/oder phasenumgetastete Empfangssignale ($u_1$).

## Claims

1. A method of recovering a signal representing the phase angle difference ($\psi$) between a local carrier signal and the carrier of an amplitude and/or phase shift keyed received signal ($u_1$), according to which

(a) initially the received signal ($u_1$) is divided into two cartesian oriented signal components (x, y) which are dependent on the phase angle difference and are in a quadrature relationship to one another, with the two signal components together representing a plurality of different signal states;

(b) and then each pair of cartesian oriented signal components (x, y) representing one of the possible signal states is converted into two polar oriented signal components (R, $\alpha$), with one of said polar signal components representing the amplitude (R) of a signal state vector formed by the two cartesian oriented signal components (x, y) and the other one of said polar signal components representing the phase angle ($\alpha$) for this signal state vector; characterized by

(c) thereafter determining an upper limit value ($R_{max}$) for the polar amplitude (R) derived from the received signal by adding an amount ($d_2$) and a lower limit value ($R_{min}$) by subtracting an amount ($d_1$) from the amplitude;

(d) employing a first quantizer (414) containing the amplitudes derived for all permitted, unfalsified signal states and whose thresholds are arranged in stages so that a threshold lies below and above each occurring amplitude value to determine all those amplitudes which are disposed between the highest threshold below or at the lower limit value ($R_{min}$) and the lowest threshold above or at the upper limit value ($R_{max}$);

(e) then determining in a second quantizer (415) containing a store of values for the phase angles derived for all permitted, unfalsified signal states as to which one of said phase angles ($\hat{\alpha}$) belonging to all signal state vectors at the previously decided amplitude values comes closest to the phase angle derived from the input signal ($u_1$); and

EP 0 281 652 B1

(f) finally, forming the difference between this phase angle ($\hat{\alpha}$) determined by quantizing and the phase angle ($\alpha$) derived from the received signal ($u_1$), said difference being proportional to the phase angle difference ($\psi$) between the local carrier signal and the carrier of the amplitude and/or phase shift keyed received signal ($u_1$).

2. A method according to claim 1, characterized in that after dividing the received signal ($u_1$) into two cartesian oriented signal components (x, y), each one of these two cartesian oriented signal components (x, y) is quantized and then each pair of cartesian oriented quantized signal components

$$(\hat{x}, \hat{y}),$$

each representing one of the possible quantized signal states, is converted into two polar oriented signal components, one of said polar signal components representing the amplitude of a signal state vector formed by the two cartesian oriented, quantized signal components and the other one of said polar signal components

$$(\hat{x}, \hat{y})$$

representing the phase angle

$$(\hat{\alpha})$$

for this signal state vector.

3. A method according to claims 1 and 2, characterized in that the quadrature related, cartesian oriented signal components (x, y) are quantized and coded in parallel in analog/digital converters (430, 431); a code word is formed of each pair of coded signal components belonging to each quantized signal state, said code word indicating the address in a memory (434) which the difference signal determined for the respective quantized signal state of the two signal components or a signal proportional thereto is stored in coded form, and the coded difference signal associated with the address is read out of said memory (434) and fed to a digital/analog converter (435).

4. A method according to claim 1 or 2, characterized in that a signum function is formed from the phase angle difference with the aid of a limiter circuit (423).

5. A method according to claim 1 or 2, characterized in that the phase angle difference is multiplied by a weighting function (w) which takes on a greater value, the fewer signal states appear that have the same amplitude as the signal state for which the phase angle difference has been determined.

6. A method according to claim 4, characterized in that the signum function of the phase angle difference is multiplied by a weighting function (w) which takes on a greater value, the fewer signal states appear that have the same amplitude as the signal state for which the phase angle difference has been determined.

7. A method according to claim 5 or 6 characterized in that the weighting function (w) does not take on negative values.

8. A method according to one of the preceding claims, characterized in that the signal representing the phase angle difference is utilized as a control signal for a voltage controlled oscillator (10) in a demodulator circuit operating with carrier recovery for amplitude and/or phase shift keyed received signals ($u_1$).

**Revendications**

1. Procédé pour obtenir un signal qui restitue la différence de phase ($\Psi$) entre un signal porteur local et la porteuse d'un signal de réception ($u_1$) modulé en amplitude et/ou en phase, procédé selon lequel

a) on décompose tout d'abord le signal de réception ($u_1$) en deux composantes (x, y) du signal dépendant de la différence de phase, placées en quadrature l'une par rapport à l'autre et définies en coordonnées cartésionnée, étant précisé que les deux composantes du signal représentent ensemble plusieurs états différents du signal,

b) et on convertit ensuite chaque paire de composantes (x, y) du signal, définies en coordonnées cartésiennes, paire qui forme respectivement l'un des états possibles du signal, en deux composantes (R, $\alpha$) du signal définies en coordonnées polaires, dont la première composante polaire du signal représente l'amplitude (R) d'un vecteur d'état du signal formé par les deux composantes (x, y) du signal définies en coordonnées cartésiennes et dont l'autre composante polaire du signal représente l'angle de phase ($\alpha$) correspondant à ce vecteur d'état du signal, caractérisé

c) par le fait que l'on détermine alors une valeur limite supérieure ($R_{max}$) en ajoutant un certain montant ($d_2$) à l'amplitude polaire (R) respectivement dérivée d'un signal de réception et que l'on détermine une valeur limite inférieure ($R_{min}$) en soustrayant un certain montant ($d_1$) de l'amplitude,

12

d) par le fait qu'ensuite, un moyen d'un premier organe de décision à valeur de seuil (414), qui contient les amplitudes dérivées de tous les états du signal parmis, non falsifiés et dont les seuils sont échelonnés de façon telle qu'en dessous et qu'au-dessus de chacune des valeurs d'amplitude qui se présente se trouve un senil, on détermine toutes les amplitudes qui se trouvent entre le seuil le plus haut situé en dessous de, ou sur, la valeur limite inférieure ($R_{min}$) et le seuil le plus bas situé au-dessus de, ou sur, la valeur limite supérieure ($R_{max}$),

e) par le fait qu'ensuite, dans un second organe de décision à valeur de seuil (415), qui contient le stock des valeurs des angles de phase dérivés de tous les états du signal parmis, non falsifiés, on détermine l'angle de phase ($\hat{\alpha}$) qui, parmi les angles de phase appartenant à tous les vecteurs d'état du signal ayant les valeurs d'amplitude précédemment déterminées, vient au plus près de l'angle de phase dérivé du signal d'entrée ($u_1$) et

f) par le fait enfin que l'on détermine la différence entre cet angle de phase ($\hat{\alpha}$), déterminé par l'organe de décision à valeur de seuil, et l'angle de phase ($\alpha$) dérivé du signal de réception ($u_1$), différence qui est proportionnelle à la différence de phase ($\Psi$) entre le signal porteur local et la porteuse du signal de réception ($u_1$) modulé en amplitude et/ou en phase.

2. Procédé selon la revendication 1, caractérisé par le fait qu'après la décomposition du signal de réception ($u_1$) en deux composantes cartésiennes ($x$, $y$) du signal, on quantifie chacune de ces deux cartésiennes ($x$, $y$) du signal et qu'ensuite on convertit chaque paire de composantes quantifiées

$$(\hat{x}, \hat{y})$$

du signal, définies en coordonnées cartésiennes, qui forme respectivement l'un des états quantifiés possibles du signal, en deux composantes du signal définies en coordonnées polaires, dont la première composante polaire du signal représente l'amplitude d'un vecteur d'état du signal formé par les deux composantes quantifiées, définies en coordonnées polaires,

$$(\hat{x}, \hat{y})$$

du signal et dont l'autre composante polaire du signal représente l'angle de phase

$$(\hat{\alpha})$$

correspondant à ce vecteur d'état du signal.

3. Procédé selon la revendication 1 et 2, caractérisé par le fait que l'on quantifie et que l'on code en parallèle, dans des convertisseurs analogiques numériques (430, 431), les composantes ($x$, $y$) du signal placées en quadrature l'une par rapport à l'autre et définies en coordonnées cartésiennes, par le fait que chaque fois, à partir des deux composantes du signal codées appartenant à chacun des états quantifiés du signal, on forme un mot de code qui indique l'adresse en mémoire (434) où le signal de différence, établi pour l'état, chaque fois quantifié, des deux composantes du signal, ou bien un signal qui lui est proportionnel, est mémorisé sous forme codée, et par le fait que le signal de différence, codé, correspondant à cette adresse, et lu dans la mémoire (434) et amené à un convertisseur numérique-analogique (435).

4. Procédé selon la revendication 1 ou 2, caractérisé par le fait qu'à partir de la différence de phase et à l'aide d'un circuit limitateur (423), on forme une fonction de signe.

5. Procédé selon la revendication 1 ou 2, caractérisé par le fait que l'on multiplie la différence de phase par une fonction de pondératoin (w) qui prend une valeur d'autant plus grande qu'il y a moins d'états du signal ayant la même amplitude que l'état du signal pour lequel la différence de phase a été déterminée.

6. Procédé selon la revendication 4, caractérisé par le fait que l'on multiplie la fonction de signe de la différence de phase par une fonction de pondération (w) qui prend une valeur d'autant plus grande qu'il y a moins d'état du signal ayant la même amplitude que l'état du signal pour lequel la différence de phase a été déterminée.

7. Procédé selon la revendication 5 ou 6, caractérisé par le fait que la fonction de pondération (w) ne prend pas de valeurs négatives.

8. Procédé selon l'une des revendications précédentes, caractérisé par l'application du signal restituant la différence de phase comme signal de commande pour un oscillateur (10) commandé par la tension dans un circuit démodulateur avec récupération de la porteuse pour des signaux de réception ($u_1$) modulés en amplitude et/ou on phase. .

FIG. 1

EP 0 281 652 B1

FIG. 2

FIG. 3

EP 0 281 652 B1

```
Y  ^
   |
   +--+--+--+--+--+--+--+--+--+--+--+--+--+--+--+--+
   | 4| 4| 4| 4| 4| 4| 4| 4| 4| 4| 4| 4| 4| 4| 4| 0|
   +--+--+--+--+--+--+--+--+--+--+--+--+--+--+--+--+
   | 1| 1|-1|-1| 1| 1|-1|-1| 1| 1|-1|-1| 1| 1| 0|-4|
 7 +--+--X--+--+--+--X--+--+--+--X--+--+--+--X--+--+
   | 1| 1|-1|-1| 1| 1|-1|-1| 1| 1|-1| 1| 1| 0|-1|-4|
   +--+--+--+--+--+--+--+--+--+--+--+--+--+--+--+--+
   | 1| 1|-1|-1| 1| 1|-1|-1| 1|-1|-1|-1| 0|-1|-1|-4|
   +--+--+--+--+--+--+--+--+--+--+--+--+--+--+--+--+
   | 1| 1| 1| 1| 1| 1| 1| 1| 1| 1|-1| 0| 1|-1| 1|-4|
   +--+--+--+--+--+--+--+--+--+--+--+--+--+--+--+--+
   | 1| 1|-1|-1| 1| 1|-1|-1| 1| 1| 0| 1| 1| 1| 1|-4|
 5 +--+--X--+--+--+--X--+--+--+--X--+--+--+--X--+--+
   | 1| 1|-1|-1| 1| 1|-1| 1| 1| 0|-1|-1| 1|-1|-1|-4|
   +--+--+--+--+--+--+--+--+--+--+--+--+--+--+--+--+
   | 4| 1|-1|-1|-1| 1|-1|-1| 0|-1|-1|-1|-1|-1|-1|-4|
   +--+--+--+--+--+--+--+--+--+--+--+--+--+--+--+--+
   | 1| 1| 0| 4| 1| 1| 1| 0| 1|-1| 1|-1| 1| 1| 1|-4|
   +--+--+--+--+--+--+--+--+--+--+--+--+--+--+--+--+
   | 1| 1|-1|-1| 1| 1| 0|-1| 1| 1| 1|-1| 1| 1| 1|-4|
 3 +--+--X--+--+--+--X--+--+--+--X--+--+--+--X--+--+
   | 1| 1|-1|-1| 1| 0|-1|-1|-1|-1|-1|-1|-1|-1|-1|-4|
   +--+--+--+--+--+--+--+--+--+--+--+--+--+--+--+--+
   | 1| 0|-1|-1| 0|-1|-1|-1| 1|-1|-1|-1|-1|-1|-1|-4|
   +--+--+--+--+--+--+--+--+--+--+--+--+--+--+--+--+
   | 4|-1| 1| 0| 1| 1| 1|-4| 1| 1| 1|-1| 1| 1| 1|-4|
   +--+--+--+--+--+--+--+--+--+--+--+--+--+--+--+--+
   | 4| 1| 0|-1| 1| 1| 1| 0| 1| 1| 1|-1| 1| 1| 1|-4|
 1 +--+--X--+--+--+--X--+--+--+--X--+--+--+--X--+--+
   | 4| 0|-1| 1| 0|-1|-1|-1|-1|-1|-1|-1|-1|-1|-1|-4|
   +--+--+--+--+--+--+--+--+--+--+--+--+--+--+--+--+
   | 0|-4|-4|-4|-1|-1|-1|-1|-4|-1|-1|-1|-1|-1|-1|-4|
   +--+--+--+--+--+--+--+--+--+--+--+--+--+--+--+--+ >

        1           3           5           7        X
```

FIG. 4

FIG. 5

EP 0 281 652 B1

# FIG. 6